# EUROPÄISCHE PATENTANMELDUNG

(11) **EP 2 604 383 A1**
(43) Veröffentlichungstag der Anmeldung: **19.06.2013**
(21) Anmeldenummer: 11193028.5
(22) Anmeldetag: 12.12.2011
(51) Int. Cl.: B23Q 7/10, B23Q 7/14, B25J 15/00, B23P 19/00

(54) **Vorrichtung und Verfahren zum Überführen von in Werkteilgebinden bereitgestellten Werkteilen mittels eines Roboters zu einer Bearbeitungsmaschine**

(71) Anmelder: Klingelnberg AG, 8050 Zürich (CH)
(72) Erfinder: Scheufler, Mathias, 76275 Ettlingen (DE)
(74) Vertreter: OK pat AG

(57) **Zusammenfassung**

Vorrichtung (100) zum Überführen von Werkteilen (102), die in Werkteilgebinden (160) bereitgestellt sind, zu einer Bearbeitungsmaschine (90), wobei das Überführen automatisiert mittels eines Roboters (200) ausgeführt wird. Die Vorrichtung (100) folgendes umfasst:
(a) übereinander stapelbare Werkteilgebinde (160), mit mehreren vordefinierten Werkteilpositionen zum Lagern je eines Werkteils (102);
(b) Bodenroller (152) zum Aufnehmen von mindestens einem Werkteilgebinde (160);
(c) eine Stapelzelleneinrichtung (120) mit einem Abstellplatz für den Bodenroller (152);
(d) einen Roboter (200), der eine Greifeinrichtung (210) zum Anfahren von vorgebbaren Positionen umfasst und der programmiert ist, ein Werkteil (102) aus einem Werkteilgebinde (160) mittels seiner Greifeinrichtung (210) aufzunehmen und zu der Bearbeitungsmaschine (90) zur Bearbeitung zu überführen.

Die Vorrichtung (100) umfasst eine Vorzentrierungseinrichtung (170), die eine Vorzentrierungsposition (178) als durch die Greifeinrichtung (210) anfahrbare Werkteilgebinde-Position für ein Werkteilgebinde (160) bereitstellt. Der Roboter (200) ist dazu programmiert mit seiner Greifeinrichtung (210) ein Werkteilgebinde (160) in der Stapelzelleneinrichtung (120) anzufahren, dieses Werkteilgebinde (160) aus der Stapelzelleneinrichtung (120) zu entnehmen, zu der Vorzentrierungsposition (178) zu überführen und dort in der Werkteilgebinde-Position positionsgenau abzustellen.

## Beschreibung

Die vorliegende Erfindung betrifft eine Vorrichtung und ein Verfahren zum Überführen von Werkteilen, die in Werkteilgebinden bereitgestellt sind, mittels eines Roboters zu einer Bearbeitungsmaschine.

Entsprechende Vorrichtungen und Verfahren finden in vielen industriellen Bereichen Anwendung, wie etwa in der Fertigungsindustrie, der Werkteilbearbeitungs- oder Werkteilfertigungsindustrie, im Apparatebau, im Fahrzeugbau, und im Luft- und Raumfahrzeugbau. In diesen Bereichen wurde früher ein Werkteil meist von einem Mitarbeiter aus angelieferten und bevorrateten Werkteilgebinden entnommen und einer Bearbeitungsmaschine übergeben, die einen Bearbeitungs- oder Montageschritt an dem Werkteil ausführt und das bearbeitete Werkteil abgibt. Das bearbeitete Werkteil kann dann von dem Mitarbeiter in ein Werkteilgebinde zurückgelegt werden. In vielen Bereichen ist dieser Arbeitsvorgang der Überführung und Rücküberführung des Werkteils heute mittels eines Roboters, etwa zur Effizienzsteigerung oder zur Einsparung von Arbeitskosten, automatisiert.

Die Werkteilgebinde enthalten ein oder mehrere Werkteile, die häufig in loser ungeordneter Anordnung oder auch in innerhalb des Werkteilgebindes vorzentrierten Positionen in dem Werkteilgebinde angeordnet sind. Die Werkteilgebinde werden ihrerseits häufig in aus mehreren Werkteilgebinden bestehenden Paketen, insbesondere Stapeln von Werkteilgebinden gesammelt und so von einer Bearbeitungsmaschine in einer Fertigungs- oder Montagestraße zu einer nächsten Bearbeitungsmaschine zum Ausführen eines nächsten Bearbeitungsschritt weiter transportiert. Dabei werden die Pakete (z.B. in Form von Stapeln) etwa auf Paletten gesammelt und mittels eines Gabelstaplers transportiert oder auf Bodenrollern gesammelt und durch Ziehen oder Schieben des Bodenrollers transportiert. Beim Stapeln können etwa Schubfächer vertikal übereinander gestapelt werden und daraus Schubladen als Werkteilgebinde in horizontaler Richtung herausgezogen werden, oder die Werkteilgebinde sind an ihrer Oberseite offen, etwa wie ein Korb, und jedenfalls übereinander stapelbar ausgestaltet.

Die Erfindung bezieht sich auf Vorrichtungen und Verfahren, in denen aus übereinander stapelbaren Werkteilgebinden gebildete Stapel auf Bodenrollern zwischen den Bearbeitungsstationen transportiert werden und in deren Nähe in Bevorratungseinrichtungen, wie etwa so genannten Stapelzellen, abgestellt werden.

Stapelzelleneinheiten sind in der Nähe einer Bearbeitungsmaschine vorgesehen zum Aufnehmen und Bevorraten bis zur Werkteil-Bearbeitung. Ausserdem können die Stapelzelleneinheiten zum Bereitstellen für den Weitertransport von Werkteilgebinde-Stapeln dienen, die insbesondere auf Bodenrollern leicht verschiebbar angeliefert bzw. weitertransportiert werden.

Herkömmliche "Stapelzelleneinheiten" umfassen eine oder mehrere Zellen zum Aufnehmen eines etwa auf einem Bodenroller oder auf einer Palette hinzutransportierten Stapels von Werkteilgebinden. In der Stapelzelleneinheit werden die Werkteilgebinde von einem Stapel etwa mittels einer servo-angetriebenen, vertikal und horizontal beweglichen Traverseneinrichtung zu einer räumlich recht genau spezifizierten Zwischenablage zentriert (dieses Verfahren wird auch Werkteilgebinde-Management genannt). Eine entsprechende Zwischenposition dient zur Zentrierung der Werkteilgebinde. Aus den dort zentrierten Werkteilgebinden werden mittels eines Roboters die Werkteile entnommen, zur Bearbeitungsmaschine überführt und nach dem Bearbeitungszyklus mittels der servo-angetriebenen Stapelzelleneinheit zurückgelegt.

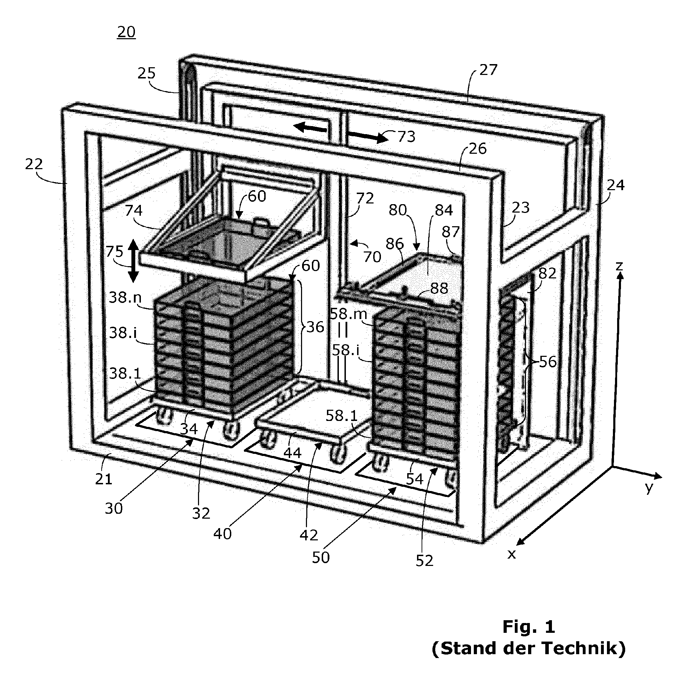

Fig. 1 zeigt schematisch eine perspektivische Ansicht einer herkömmlichen Stapelzelleneinheit 20. Die Stapelzelleneinheit 20 umfasst z.B. eine Bodenplatte 21 an der mehrere Vertikalträger 22, 23, 24, 25 befestigt sind. Die Vertikalträger 22, 23, 24, 25 können mit Längsträgern 26, 27 verbunden sein. Die Stapelzelleneinheit 20 umfasst drei Abstellplätze 30, 40, 50. Ein erster Bodenroller 32 mit einem Bodenrollenträger 34 steht auf dem ersten Abstellplatz 30 und trägt einen Stapel 36 mit acht Werkteilgebinden 60. Es sind mehrere Vertikalpositionen 38.1 - 38.n in der Stapelzelleneinheit 20 vorgegeben. Auf dem zweiten Abstellplatz 40 steht ein zweiter Bodenroller 42 mit Träger 44. Der zweite Bodenroller 42 ist unbeladen. Auf dem dritten Abstellplatz 50 steht ein dritter Bodenroller 52 mit Träger 54. Der Bodenroller 52 trägt einen Stapel 56 mit zehn Werkteilgebinden 60. Es sind mehrere Vertikalpositionen 58.1 - 58.m an dem Stapel 56 vorgegeben. Die Stapelzelleneinheit 20 umfasst eine Traverseneinrichtung 70 mit einem Trägerrahmen 72 und einem Traversenträger 74. Der Doppelpfeil 73 zeigt an, dass die Traverseneinrichtung 70 horizontal (parallel zur y-Achse) verschoben werden kann. Der Doppelpfeil 75 zeigt an, dass die Traverseneinrichtung 70 vertikal (parallel zur z-Achse) verschoben werden kann. Im gezeigten Moment trägt die Traverseneinrichtung 70 ein Werkteilgebinde 60, um es zu einer Ablageeinrichtung 80 innerhalb der Stapelzelleneinheit 20 zu überführen. Die Ablageeinrichtung 80 umfasst eine Rückwand 82, eine Ablagefläche 84 sowie seitliche Zentriermittel 86 und ggfs. rückwärtige Zentriermittel 87 und/oder vorderseitige Zentriermittel 88. In einer solchen Stapelzelleneinheit 20 kann ein Werkteilgebinde 60 in eine genau definierte Position der Ablageeinrichtung 80 überführt werden. Von dort kann ein Roboter ein Werkteil entnehmen.

Bei der Stapelzelleneinheit 20 handelt es sich um eine aktive Einheit, die unter anderem Mittel zum Bewegen der Traverseneinrichtung 70 umfasst.

Nachteilig bei diesen Stapelzelleneinheiten ist, dass eine aufwendige und kostenintensive Ablageeinrichtung 80 als Zwischenablage, stabile Führungen für die Traverseneinrichtung 70 und Wegmesssystem benötigt werden, und ebenso dass in der Stapelzelleneinheit 20 eine eigene komplexe Steuerung für den Transport der Werkteilgebinde 60 zwischen den Positionen der Werteilgebinde 60 und der Zwischenablage erforderlich sind.

Es ist eine Aufgabe der vorliegenden Erfindung, den technischen Aufwand und die Kosten für erforderliche intelligente servo-angetriebene, vertikal und horizontal beweglichen Traverseneinrichtung sowie für die kostenintensive Zwischenablage, die stabilen Führungen für die Traverseneinrichtung und Wegmesssysteme, kurz gesagt den technischen Aufwand und die Kosten für das Werkteilgebinde-Management zu senken.

Ein Grundgedanke der Erfindung besteht nun darin, zusätzlich zu dem in herkömmlichen Stapelzelleneinheiten ohnehin bereits von dem Roboter ausgeführten Werkteil-Management, auch das Werkteilgebinde-Management von dem ohnehin vorhandenen Roboter ausführen zu lassen.

Die vorliegende Erfindung betrifft eine Vorrichtung, die auch als Roboterzellensystem bezeichnet wird, mit einer Stapelzelleneinheit und einem Roboter. Die Vorrichtung ist zum Überführen von Werkteilen, die in Werkteilgebinden bereitgestellt sind, zu einer Bearbeitungsmaschine. Ein bearbeitetes Werkteil kann je nach Ausführungsform auch von der Bearbeitungsmaschine z.B. in ein Werkteilgebinde zurück überführt werden. Das Überführen, und gegebenenfalls das Rücküberführen, wird automatisiert mittels des Roboters ausgeführt, wobei in der Vorrichtung ein Koordinatensystem definiert ist, um die automatisierten Bewegungen räumlich kontrollieren zu können. Die Vorrichtung umfasst mindestens ein stapelbares, vorzugsweise übereinander stapelbares, Werkteilgebinde, das mehrere vordefinierte Werkteilpositionen zum Lagern je eines Werkteils aufweist. Es kommt mindestens ein Bodenroller zum Aufnehmen von mindestens einem Werkteilgebinde zum Einsatz. Der/die Bodenroller werden in der Stapelzelleneinrichtung auf entsprechenden Abstellplätzen platziert. Der Roboter umfasst eine Greifeinrichtung zum Anfahren von in dem Koordinatensystem vorgebbaren Positionen und ist programmiert, ein Werkteil aus einer ersten bestimmten vordefinierten Werkteilgebinde-Position eines ersten Werkteilgebindes mittels seiner Greifeinrichtung aufzunehmen und zu der Bearbeitungsmaschine zur Bearbeitung zu überführen. Die Erfindung zeichnet sich dadurch aus, dass die Vorrichtung eine Vorzentrierungseinrichtung umfasst, die eine Vorzentrierungsposition als durch die Greifeinrichtung anfahrbare Werkteilgebinde-Position für ein Werkteilgebinde bereitstellt. Der Roboter ist so programmiert, dass er mit seiner Greifeinrichtung ein Werkteilgebinde anfahren, dieses Werkteilgebinde aufnehmen, zu der Vorzentrierungsposition überführen und dort in der Werkteilgebinde-Position abstellen kann.

Der Einsatz der Vorzentrierungseinrichtung ermöglicht das roboter-gesteuerte, genau definierte Positionieren mindestens eines Werkteilgebindes in einem Zwischenschritt. Sobald sich das Werkteilgebinde in der Vorzentrierungsposition befindet, kann der Roboter mit seiner Greifeinrichtung ein Werkteil in dem Werkteilgebinde anfahren, übernehmen und zur Bearbeitungsmaschine zur Bearbeitung zu überführen.

Es ist ein Vorteil der Erfindung, dass statt einer komplizierten und teuren Stapelzelleneinheit eine einfachere Stapelzelleneinheit eingesetzt werden kann, die lediglich die Vorgabe erfüllen muss, dass der/die Bodenroller in genaue Position(en) gebracht und dort durch fixiert werden können. Vorzugsweise geschieht das Fixieren durch arretieren des/der Bodenroller. Das Fixieren ermöglicht es dem Roboter mit der ihm vorgegebenen Genauigkeit ein oberstes Werkteilgebinde aus einem Stapel von Werkteilgebinden von einem Bodenroller zu entnehmen und positionsgenau an der Vorzentrierungsposition der Vorzentrierungseinrichtung abzugeben oder abzustellen. Da dieses Werkteilgebinde sich nun genau in der Vorzentrierungsposition befindet, reicht die vorgegebene Genauigkeit des Roboters, um ein Werkteil aus dem Werkteilgebinde aufnehmen zu können.

Anders als beim Stand der Technik kann die Stapelzelleneinheit passiv ausgeführt sein, d.h. sie braucht keine Stellmotoren, Wegsensoren, und Positionierungselemente, usw.

Die Aufgabe wird gelöst durch eine Vorrichtung nach Anspruch 1 und durch ein Verfahren nach Anspruch 26.

Gemäss Erfindung ist ein Abstellplatz so ausgestaltet (z.B. durch den Einsatz von X-Y-Positioniermittel), dass ein Bodenroller dort in einer in der X-Y-Ebene definierten Horizontalposition abgestellt werden kann, wobei die Werkteile in der Stapelzelleneinrichtung zur Bearbeitung durch die Bearbeitungsmaschine bevorratet werden. Das eigentliche Bereitstellen für die Bearbeitung geschieht über eine Vorzentrierungseinrichtung, an die mindestens ein Werkteilgebinde durch den Roboter positionsgenau übergeben wird. Nachdem der Roboter ein Werkteilgebinde dort abgestellt hat, kann er ein Werkteil entnehmen und der Bearbeitungsmaschine zuführen.

Die Bearbeitungsmaschine kann eine Werkzeugmaschine, eine Fertigungsmaschine, eine Montagemaschine oder dergleichen sein.

Vorzugsweise wird die vorliegende Erfindung auf die Fertigung von Zahnrädern und/oder Getriebeteilen angewendet. In diesem Fall handelt es sich bei der Bearbeitungsmaschine z.B. um eine Verzahnungsmaschine.

### ZEICHNUNGEN

Weitere Einzelheiten und Vorteile der Erfindung werden im Folgenden anhand von Ausführungsbeispielen und mit Bezug auf die Zeichnung beschrieben.
- Fig. 1: zeigt schematisch eine perspektivische Ansicht einer herkömmlichen Stapelzelleneinheit.
- Fig. 2: zeigt schematisch eine perspektivische Ansicht einer ersten Ausführungsform einer Vorrichtung nach der Erfindung.
- Fig. 3: zeigt schematisch eine Seitenansicht der ersten Ausführungsform.
- Fig. 4: zeigt schematisch eine perspektivische Ansicht eines ersten Bodenrollers, der in einer Vorrichtung nach der Erfindung eingesetzt werden kann.
- Fig. 5: zeigt schematisch eine perspektivische Ansicht eines ersten Werkteilgebindes mit mehreren Werkteilen, das in einer Vorrichtung nach der Erfindung eingesetzt werden kann.
- Fig. 6: zeigt schematisch eine perspektivische Ansicht eines Teils des Roboters, der speziell dazu ausgestattet ist Werkteilgebinde mit Greiferfingern zu greifen.
- Fig. 7: zeigt schematisch eine perspektivische Ansicht eines vorderen Teiles der Greifeinrichtung mit einem speziellen Adapter zum Aufnehmen eines Werkteilgebindes.
- Fig. 8: zeigt schematisch eine perspektivische Ansicht eines vorderen Teiles der Greifeinrichtung mit einem seitlichen Hakenelement, um Werkteilgebinde aufnehmen zu können.

### DETAILLIERTE BESCHREIBUNG

Im Zusammenhang mit der vorliegenden Beschreibung werden Begriffe verwendet, die auch in einschlägigen Publikationen und Patenten Verwendung finden. Es sei jedoch angemerkt, dass die Verwendung dieser Begriffe lediglich dem besseren Verständnis dienen soll. Der erfinderische Gedanke und der Schutzumfang der Patentansprüche soll durch die spezifische Wahl der Begriffe nicht in der Auslegung eingeschränkt werden. Die Erfindung lässt sich ohne weiteres auf andere Begriffssysteme und/oder Fachgebiete übertragen. In anderen Fachgebieten sind die Begriffe sinngemäß anzuwenden.

Der Begriff "Stapelzelleneinheit" 120 wird hierin als Sammelbegriff verwendet für Einrichtungen, die es ermöglichen mindestens einen Bodenroller 180 mit einem oder mehreren aufeinander gestapelten Werkteilgebinden 160 aufzunehmen.

Der Begriff "Bodenroller" 180 wird hierin als Sammelbegriff verwendet für Einrichtungen, die es ermöglichen mindestens einen oder mehrere aufeinander gestapelte Werkteilgebinde 160 aufzunehmen und gemeinsam entlang eines Bodens zu bewegen. Ein Bodenroller 180 kann bei allen Ausführungsformen der Erfindung auch ein schienengebundenes Fahrzeug sein.

Der Begriff "Werkteilgebinde" 160 wird hierin als Sammelbegriff verwendet für Einrichtungen, die es ermöglichen mehrere Werkteile 102 aufzunehmen. Die Werkteilgebinde 160 sind noch oben hin offen, um einen Zugriff seitens der Greifereinrichtung 210 des Roboters 200 zu ermöglichen. Vorzugsweise kommen bei allen Ausführungsformen Körbe oder ähnliche Gebinde als Werkteilgebinde 160 zum Einsatz.

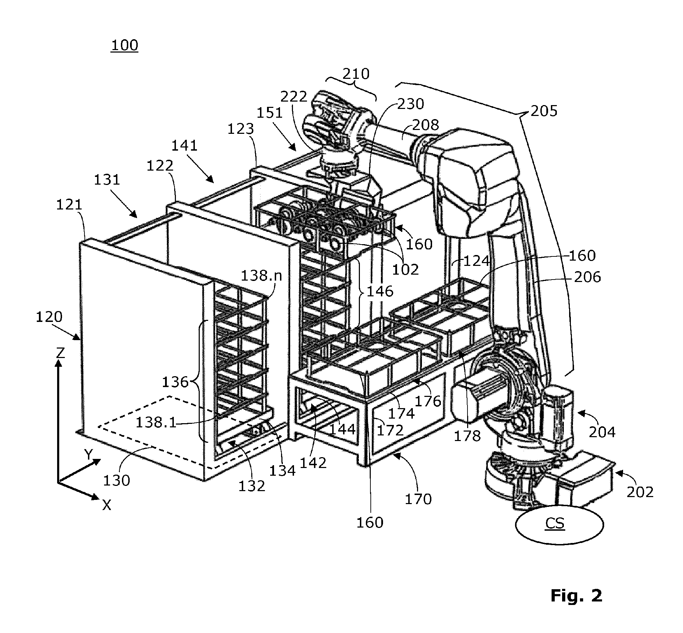

Anhand der Fig. 2 wird im Folgenden eine bevorzugte Ausführungsform der Erfindung beschrieben.

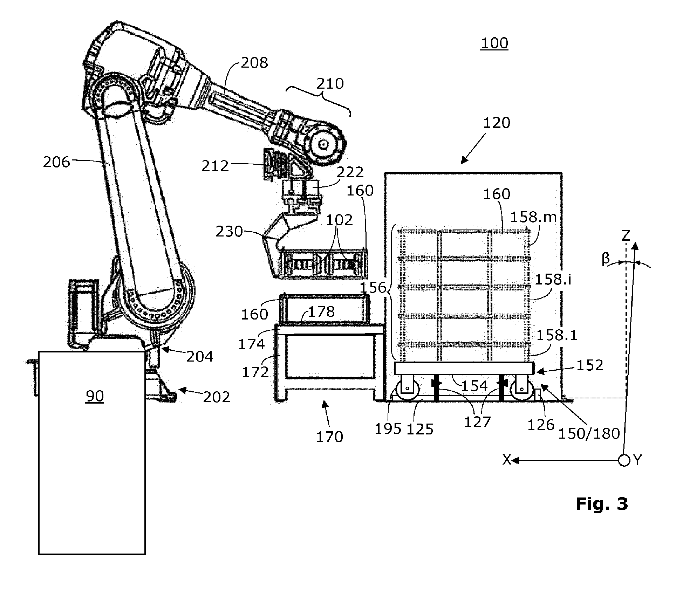

Gezeigt ist ein Roboterzellensystem 100, das hier auch allgemein als Vorrichtung 100 bezeichnet wird, und das zum Überführen von Werkteilen 102 zu einer Bearbeitungsmaschine 90 (in Fig. 3 schematisch und in verkleinerter Grösse gezeigt) und zum Rücküberführen der durch die Bearbeitungsmaschine 90 bearbeiteten Werkteile 102 von der Bearbeitungsmaschine 90 ausgelegt ist. Die Werkteile 102 werden in einer erfindungsgemässen Stapelzelleneinrichtung 120 bereit gestellt, wo sie im gezeigten Ausführungsbeispiel in einer Vielzahl von Werkteilgebinden 160 gelagert sind.

Gemäss Erfindung wird das Überführen und das Rücküberführen automatisiert mittels eines Roboters 200 ausgeführt und die Werkteile 102 können aus einem Werkteilgebinde 160 entnommen und nach der Bearbeitung in das gleiche oder ein anderes Werkteilgebinde 160 abgelegt werden. Der Roboter 200 übernimmt somit nicht nur das Handhaben der Werkteile 102 (Werkteil-Management) sondern neu auch das Werkteilgebinde-Management.

In der Vorrichtung 100 ist vorzugsweise in Bezug auf den Roboter 200 ein Koordinatensystem, vorzugsweise ein kartesisches Koordinatensystem (X, Y, Z) definiert, wobei vorzugsweise die X-Y-Ebene parallel zu einer horizontalen Bodenfläche und die Z-Achse parallel zu einer vertikalen Richtung verlaufen. Die Vorrichtung 100 kann bei allen Ausführungsformen auch mehrere Koordinatensysteme aufweisen, wobei dann mittels Koordinatentransformation Umrechnungen erforderlich sein können.

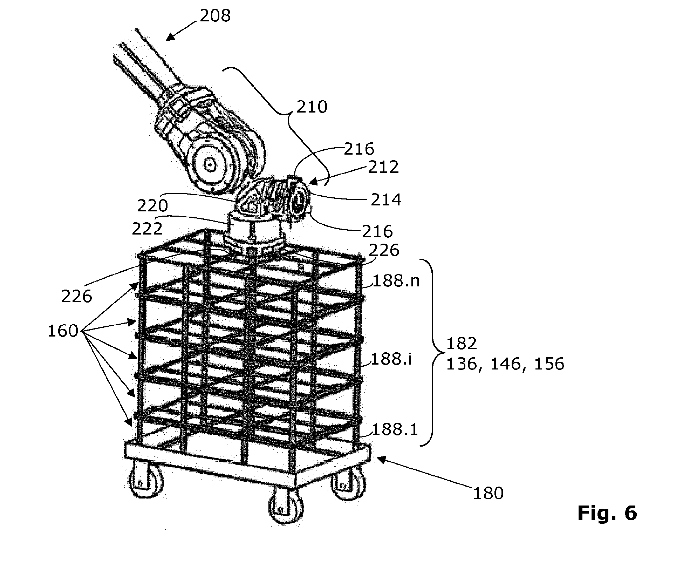

Die Vorrichtung 100 umfasst:
(a) eine Vielzahl von im Wesentlichen identisch ausgestalteten, übereinander stapelbaren Werkteilgebinden 160, wobei jedes Werkteilgebinde 160 so ausgestaltet ist, dass darin eine oder mehrere vordefinierte Werkteilpositionen zum Lagern der Werkteile 102 ausgebildet ist/sind. In Fig. 2 ist ein Werkteilgebinde 160 mit insgesamt sechs Werkteilen 102 gezeigt, d.h. dieses Werkteilgebinde 160 hat sechs vordefinierte Werkteilpositionen;
(b) mindestens einen Bodenroller 180 (Fig. 2 zeigt insgesamt zwei Bodenroller 132, 142), wobei jeder Bodenroller 180 dazu ausgebildet ist, etwa von einer Bedienperson, auf der Bodenfläche verschoben zu werden und einen aus Werkteilgebinden 160 gebildeten Werkteilgebinde-Stapel 182 (siehe z.B. Fig. 6) zu tragen. Jedem Werkteilgebinde 160 ist in diesem Werkteilgebinde-Stapel 182 eine in der vertikalen Richtung definierte Vertikalposition 188.1 - 188.n zugeordnet, wie in Fig. 6 zu erkennen ist.
(c) eine Stapelzelleneinrichtung 120, in der mindestens ein Abstellplatz 130 (in Fig. 2 sind drei Abstellplätze 130, 140, 150 vorgesehen, wobei nur der Abstellplatz 130 in Fig. 2 angedeutet ist) zum Abstellen von Bodenrollern 180, etwa durch eine Bedienperson, vorgesehen ist. Auf jedem Abstellplatz 130, 140, 150 kann ein Bodenroller 180; 132, 142, 152 mit einem aus einer vorbestimmten Anzahl n von Werkteilgebinden 160 gebildeten Werkteilgebinde-Stapel 182; 132, 142, 152 abgestellt werden. Auf diese Weise kann jedem dieser Abstellplätze 130, 140, 150 eine entsprechende vorbestimmte Anzahl n möglicher, in der Vorrichtung 100 definierbarer, d.h. von der Greifeinrichtung 210 des Roboters 200 anfahrbarer, Werkteilkorb-Positionen zugeordnet werden, die in dem Koordinatensystem z.B. durch Angabe einer Horizontalposition auf der Bodenfläche und einer Vertikalposition 138.1 - 138.n; 158.1 - 158.m (siehe Fig. 3) in der vertikalen Richtung angebbar sind. Eine jeweilige Vertikalposition 138.1 - 138.n; 158.1 - 158.m der in der Vorrichtung 100 definierbaren (anfahrbaren) Werkteilgebinde-Positionen ist im Wesentlichen durch die entsprechenden Vertikalpositionen 188.1 - 188.n eines Werkteilgebindes 160 in dem Werkteilgebinde-Stapel 182 auf dem abgestellten Bodenroller 180 vorgegeben.
(d) einen Roboter 200, der mindestens eine verfahrbare, zu vorgebbaren Positionen in der Vorrichtung 100 bewegbare Greifeinrichtung 210 umfasst und der dazu ausgestaltet, programmiert und gegebenenfalls trainiert ist ein erstes Werkteilgebinde 160, das in einer ersten bestimmten vordefinierten Werkteilgebinde-Position bereitgestellt ist, mittels seiner Greifeinrichtung 210 aufzunehmen und zu einer Vorzentrierungseinrichtung 170 zu überführen. Ferner kann die Greifeinrichtung 210 ein Werkteil 102 aufnehmen und zur Bearbeitungsmaschine 90 überführen und von der Bearbeitungsmaschine 90 ein bearbeitetes Werkteil 102 aufnehmen, und dieses zum ersten Werkteilgebinde 160 oder zu einem anderen Werkteilgebinde 160 überführen und es in einer der innerhalb dieses ersten oder des anderen Werkteilkorbes 160 vordefinierten Werkteilpositionen ablegen.

In Fig. 2 ist ein Computerprogrammprodukt CS schematisch neben dem Roboter 200 angedeutet. Das Computerprogrammprodukt CS dient der Steuerung der Bewegungen des Roboters 200.

Die erfindungsgemässe Vorrichtung 100 zeichnet sich speziell dadurch aus, dass sie in allen Ausführungsformen die erwähnte Vorzentrierungseinrichtung 170 umfasst, die in einer vorgegebenen Position bei der Stapelzelleneinrichtung 120 angeordnet ist. Die Vorzentrierungseinrichtung 170 umfasst mindestens eine Vorzentrierungsposition als eine in der Vorrichtung 100 definierte, d.h. eine durch den Roboter 200 anfahrbare Werkteilgebinde-Position für ein Werkteilgebinde 160.

Der Roboter 200 ist ferner dazu ausgestaltet, programmiert und gegebenenfalls trainiert, mit seiner Greifeinrichtung 210 ein Werkteilgebinde 160, das in einer beliebigen Vertikalposition 138, 148, 158 in einem Werkteilgebinde-Stapel 136, 146, 156 in der Stapelzelleneinrichtung 120 auf einem (etwa von einer Bedienperson, ausgewählten ersten Abstellplatz 130, 140, 150 abgestellten) ersten Bodenroller 132, 142, 152 anzufahren, dieses Werkteilgebinde 160 aufzunehmen, zu der mindestens einen Vorzentrierungsposition der Vorzentrierungseinrichtung 170 zu überführen und dort positionsgenau abzustellen.

Da dieses Werkteilgebinde 160 nun in einer Vorzentrierungsposition der Vorzentrierungseinrichtung 170 abgestellt wurde, kann der Roboter 200 mit seiner Greifeinrichtung 210 problemlos einzelne Werkteile 102 nacheinander aus dem Werkteilgebinde 160 entnehmen und an die Bearbeitungsmaschine 90 übergeben.

Gemäss Erfindung wird bewusst auf einen zweistufigen Ansatz gesetzt, bei dem die Position der Werkteilgebinde 160 in einem Werkteilgebinde-Stapel 136, 146, 156 in der Stapelzelleneinrichtung 120 keine so hohen Genauigkeitsanforderungen erfüllen muss. Durch technische Massnahmen an der Stapelzelleneinrichtung 120 kann gewährleistet werden, dass auch krumme oder leicht schief stehende Bodenroller 132, 142, 152 in eine akzeptable genaue Position überführt werden, wie in Fig. 3 angedeutet. Die so erzielte Positionsgenauigkeit reicht aus, um ein Greifen der Werkteilgebinde 160 in der Stapelzelleneinrichtung 120 mit der Greifeinrichtung 210 zu ermöglichen.

Deutlich genauer ist dann die Positionierung nachdem ein Werkteilgebinde 160 von der Greifeinrichtung 210 in einer Vorzentrierungsposition der Vorzentrierungseinrichtung 170 abgestellt wurde.

Fig. 2 zeigt folgende weitere beispielhafte Details, die bei allen Ausführungsformen der Erfindung zum Einsatz kommen können.

Eine mögliche Ausrichtung eines kartesischen Koordinatensystems X, Y, Z ist neben der Stapelzelleneinrichtung 120 gezeigt, wobei vorzugsweise die X-Y-Ebene parallel zu der horizontalen Bodenfläche und die Z-Achse parallel zu der vertikalen Richtung verlaufen.

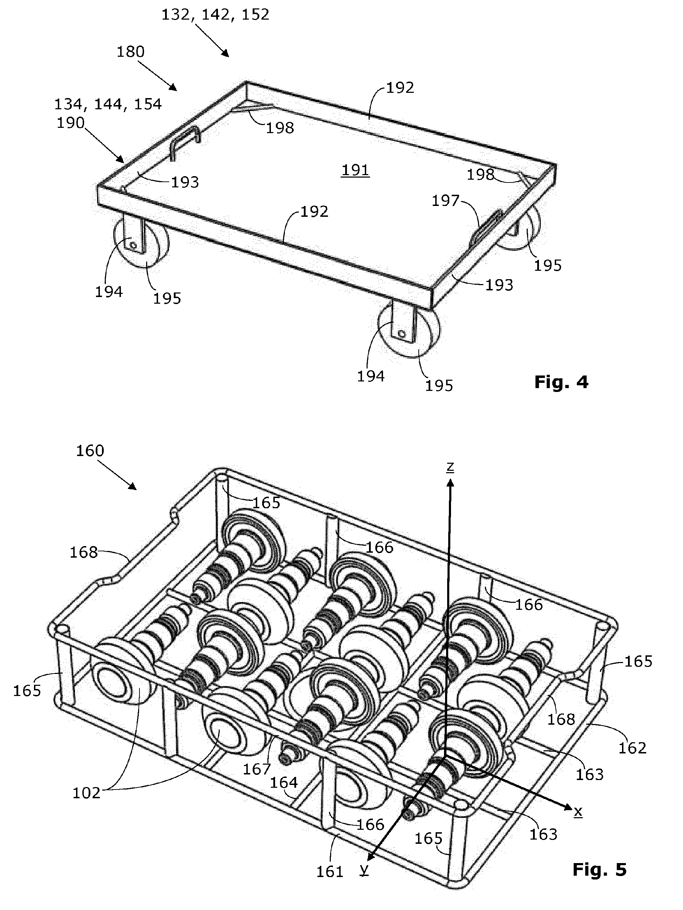

Ein erster Abstellplatz 130 ist unterhalb des linken ersten Bodenrollers 132 angedeutet. Der erste Bodenroller 132 steht auf dem ersten Abstellplatz 130 und umfasst neben einem ersten Bodenrollerträger 134, der in Fig. 4 genauer zu erkennen ist, hier fünf aufeinander gestapelte Werkteilgebinde 160. Die fünf aufeinander gestapelten Werkteilgebinde 160 bilden einen ersten Stapel 136, wobei die unterste Vertikalposition mit 138.1 und die oberste mit 138.n bezeichnet ist.

Ein zweiter Abstellplatz 140 ist in der Mitte und ein dritter Abstellplatz 150 links in der Stapelzelleneinrichtung 120 angeordnet. Die Begrenzungen dieser beiden Abstellplätze 140, 150 sind in Fig. 2 nicht zu sehen. Ein zweiter Bodenroller 142 steht auf dem zweiten Abstellplatz 140 und umfasst neben dem zweiten Bodenrollerträger 144 fünf aufeinander gestapelte Werkteilgebinde 160. Die fünf aufeinander gestapelten Werkteilgebinde 160 bilden einen zweiten Stapel 146. Ein sechstes Werkteilgebinde 160 wird im gezeigten Moment von der Greifeinrichtung 210 des Roboters 200 angehoben. Das Werkteilgebinde 160 ist mit mehreren Werkteilen 102 beladen.

Die Stapelzelleneinheit 120 kann bei allen Ausführungsformen mehrere Zellenseitenwände 121, 122, 123 und 124 umfassen, wie gezeigt. Durch diese Zellenseitenwände 121, 122, 123 und 124 können z.B. drei Einstellzellen 131, 141, 151 definiert werden. Innerhalb dieser Einstellzellen 131, 141, 151 befinden sich die erwähnten Abstellplätze 130, 140, 150.

Im unmittelbaren Umfeld ist außerhalb der Stapelzelleneinrichtung 120 die Vorzentrierungseinrichtung 170 vorgesehen. In Fig. 2 steht diese Vorzentrierungseinrichtung 170 unmittelbar vor der Stapelzelleneinrichtung 120. Die Vorzentrierungseinrichtung 170 kann z.B. auf einem Sockel 172 ruhen und kann eine Auflageplatte 174 umfassen. Z.B. auf dieser Auflageplatte 174 kann/können die Werkteilgebinde 160 abgestellt werden. In Fig. 2 befinden sich zwei Werkteilgebinde 160 auf der Vorzentrierungseinrichtung 170 in genau definierten Vorzentrierungspositionen. Die Vorzentrierungseinrichtung 170 kann einen ersten Vorzentrierungsplatz 176 und einen zweiten Vorzentrierungsplatz 178 umfassen. Das linke Werkteilgebinde 160 auf dem ersten Vorzentrierungsplatz 176 kann z.B. zum Entnehmen von zu bearbeitenden Werkteilen 102 und das rechte Werkteilgebinde 160 zum Ablegen von bearbeiteten Werkteilen 102 verwendet werden. Die bearbeiteten Werkteilen 102 können bei allen Ausführungsformen aber auch an einem anderen Ort abgelegt werden.

Der Roboter 200 kann bei allen Ausführungsformen z.B. eine Sockeleinheit 202, eine Basiseinheit 204 und einen Roboterarm 205 mit einem ersten Armelement 206 und einem zweiten Armelement 208 umfassen. Die Greifeinrichtung 210 sitzt an dem zweiten Armelement 208. Die Greifeinrichtung 210 umfasst eine Werkteil-Greifeinrichtung 212. In Fig. 2 trägt die Werkteil-Greifeinrichtung 212 eine Werkteilgebinde-Greifeinrichtung 222.

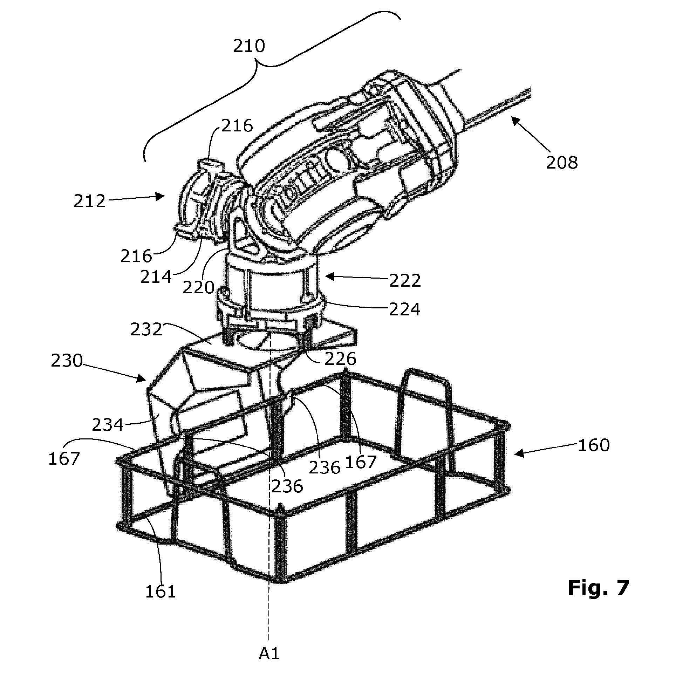

Die Werkteilgebinde-Greifeinrichtung 222 kann bei allen Ausführungsformen der Erfindung als spezieller Adapter 230 zum Greifen und gewichtszentrierten Anheben von Werkteilgebinden 160 ausgelegt sein. Details der Werkteilgebinde-Greifeinrichtung 222 kann man auch den Figuren 3 und 7 entnehmen.

Der Roboter 200 kann bei allen Ausführungsformen entweder gleichzeitig sowohl die Werkteil-Greifeinrichtung 212 und die Werkteilgebinde-Greifeinrichtung 222 umfassen, oder die Werkteil-Greifeinrichtung 212 und die Werkteilgebinde-Greifeinrichtung 222 können bei allen Ausführungsformen auswechselbar ausgeführt sein. Zu diesem Zweck kommt vorzugsweise bei allen Ausführungsformen eine Wechseleinrichtung 220 zum Einsatz.

In Fig. 3 ist die Vorrichtung der Fig. 2 von der Seite gezeigt. Es ist ein Moment dargestellt, kurz bevor die Greifeinrichtung 210 mit der Werkteilgebinde-Greifeinrichtung 222 das Werkteilgebinde 160 samt Werkteilen 102 auf dem Vorzentrierungsplatz 178 der Vorzentrierungseinrichtung 170 abstellt. Ein Werkteilgebinde 160 steht bereits auf dem Vorzentrierungsplatz 176.

In der Stapelzelleneinheit 120 ist vorzugsweise bei allen Ausführungsformen im unteren Bereich ein Anschlag- bzw. Einrastmittel 126 vorgesehen, um einen genauen Anschlagpunkt für einen Bodenroller 152 vorzugeben. Zusätzlich können bei allen Ausführungsformen Führungsmittel 125 (z.B. Führungsschienen oder Kufen) und/oder Arretiermittel 127 vorgesehen sein, die es ermöglichen den Bodenroller 152 in einer genau definierten Position zu fixieren. Falls der Bodenroller 152 z.B. leicht schräg stehen sollte, kann er manuell oder durch den Roboter 200 leicht angehoben oder gekippt und in die richtige Horizontallage gebracht werden. Dies ist in Fig. 3 durch den Winkel β neben der Z-Achse angedeutet. Sobald die richtige Horizontallage des Bodenrollers 152 erreicht und durch Arretieren fixiert ist, sind auch die Vertikalpositionen 158.1 bis 158.n ausreichend genau vorgegebenen, um ein Entnehmen eines Werkteilgebindes 160 aus der obersten Position des Stapels 156 zu ermöglichen.

Fig. 4 zeigt einen beispielhaften Bodenroller 180, der im Rahmen der Erfindung eingesetzt werden kann. Der Bodenroller 180 kann bei allen Ausführungsformen einen Bodenrollerträger 190 mit einer Trägerplatte 191 und Seitenwänden 192, 193 umfassen. An dem Bodenrollerträger 190 können Rollenaufhängungen 194 mit Rollen 195 angebracht sein. Es können Zentrierbügel 197 und optionale Eckauflagestege 198 vorgesehen sein.

Fig. 5 zeigt eine beispielhaftes Werkteilgebinde 160, das im Rahmen der Erfindung eingesetzt werden kann. Vorzugsweise kommen bei allen Ausführungsformen Körbe (vorzugsweise in Form von Gitterrahmen) als Werkteilgebinde 160 zum Einsatz. Das Werkteilgebinde 160 kann bei allen Ausführungsformen z.B. folgende Stege und Träger umfassen: Bodenlängsbegrenzungsstege 161, Bodenquerbegrenzungsstege 162, Bodengitterlängsstege 163, Bodengitterquerstege 164, Eckträger 165, Seitenträger 166, Relinglängsstege 167, Relingquerstege 168. Wie in Fig. 5 gezeigt, können z.B. mehrere Werkteile 102 in dem Werkteilgebinde 160 gelagert werden. Eine mögliche Orientierung eines x, y, z-Koordinatensystems ist in Fig. 5 gezeigt.

Fig. 6 zeigt schematisch eine perspektivische Ansicht eines Teils des Roboters 200, der speziell dazu ausgestattet ist Werkteilgebinde 160 mit Werkteilgebinde-Greiffingern 226 zu greifen. Die Werkteilgebinde-Greifeinrichtung 222 kann zu diesem Zweck bei allen Ausführungsformen der Erfindung zum direkten Greifen bzw. Aufnehmen und Tragen von Werkteilgebinden 160 ausgelegt sein, wie in Fig. 6 gezeigt. Der Bodenroller 180 ist bei allen Ausführungsformen dazu ausgebildet auf oder entlang einer Bodenfläche verschoben zu werden und einen aus mindestens einem Werkteilgebinde 160 gebildeten Werkteilgebinde-Stapel 182 zu tragen. Jedem Werkteilgebinde 160 ist in diesem Stapel 182 eine in vertikaler Richtung definierte Vertikalposition 188.1 - 188.n zugeordnet. Durch das Arretieren des Bodenrollers 180 in einer erfindungsgemässen Stapelzelleneinheit 120, wie beschrieben, sind die Vertikalposition 188.1 - 188.n genau genug fixiert, um dem Roboter 200 das Greifen eines Werkteilgebindes 160 zu ermöglichen.

Die Werkteil-Greifeinrichtung 212 umfasst vorzugsweise bei allen Ausführungsformen eine Werkteil-Greifhand 214 mit zwei oder mehr Werkteil-Greiffingern 216 zum Greifen bzw. Aufnehmen eines Werkteils 102. In Fig. 6 ist ein Moment gezeigt, in dem die Werkteil-Greifhand 214 nicht zum Einsatz kommt.

Fig. 7 zeigt schematisch eine perspektivische Ansicht eines vorderen Teiles der Greifeinrichtung 210 mit einer speziellen Adaptereinrichtung 230 zum Aufnehmen eines Werkteilgebindes 160. Die Adaptereinrichtung 230 ist speziell zum Greifen und gewichtszentrierten Anheben von Werkteilgebinden 160 ausgelegt. Der Schwerpunkt ist so gewählt, dass an dem Roboter 200 keine grossen Hebelarmwirkungen entstehen. Vorzugsweise ist die Adaptereinrichtung 230 bei allen Ausführungsformen so ausgelegt, dass der Schwerpunkt eines voll mit Werkteilen 102 beladenen Gebindes 160 genau in der Verlängerung einer Achse A1 der Greifeinrichtung 210 liegt.

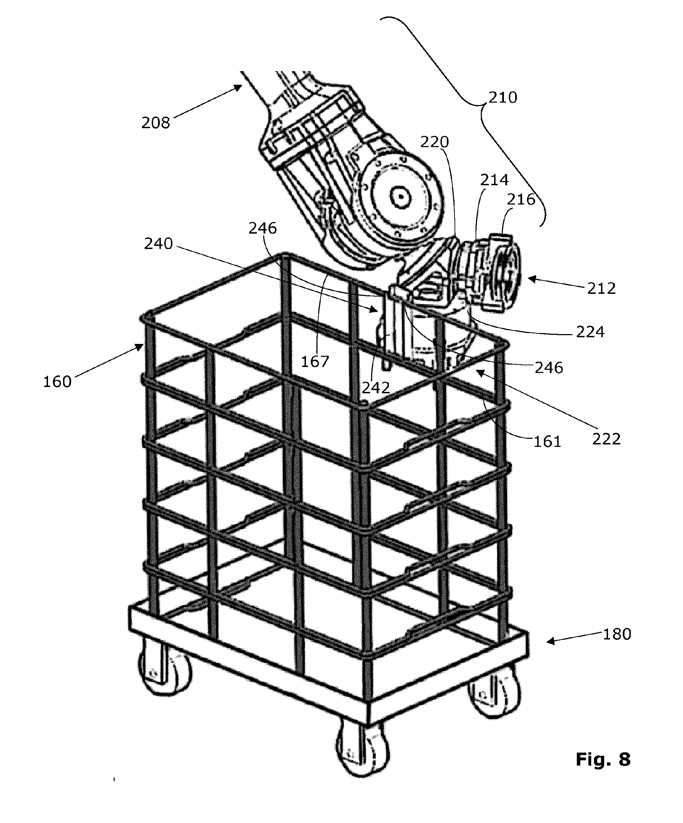

Vorzugsweise kann bei allen Ausführungsformen durch eine Drehbewegung der Wechseleinrichtung 220 entweder die Werkteilgebinde-Greifeinrichtung 222 zum Greifen eines Werkteilgebindes 160 oder die Werkteil-Greifeinrichtung 212 zum Greifen eines Werkteils 102 zum Einsatz kommen. An der Werkteilgebinde-Greifeinrichtung 222 kann entweder die erwähnte Adaptereinrichtung 230 sitzen, oder die Werkteilgebinde-Greifeinrichtung 222 kann ein einfacheres Werkteilgebinde-Adapterteil 242 (siehe Fig. 8) umfassen. Das Werkteilgebinde-Adapterteil 242 wird auch als zweite Adaptereinrichtung 240 bezeichnet.

Fig. 8 zeigt schematisch eine perspektivische Ansicht eines vorderen Teiles der Greifeinrichtung 210 mit einem seitlichen Hakenelement 242, um Werkteilgebinde 160 aufnehmen zu können. Das seitliche Hakenelement 242 dient hier als zweite Adaptereinrichtung 240. Die zweite Adaptereinrichtung 240 hat gegenüber der Adaptereinrichtung 230 den Vorteil, dass sie deutlich kleiner und daher weniger sperrig ist. Die zweite Adaptereinrichtung 240 eignet sich besonders für Werkteilgebinde 160, die weniger schwer sind. Bei schweren oder grossen Werkteilgebinden 160 wird vorzugsweise die Adaptereinrichtung 230 eingesetzt.

Die Adaptereinrichtung 230 kann bei allen Ausführungsformen koaxial zur Werkteilgebinde-Greifeinrichtung 222 befestigt sein, wie in Fig. 7 gezeigt. Die Adaptereinrichtung 230 kann bei allen Ausführungsformen ein Greifhand-Adapterteil 232 umfassen, das von den Fingern 226 gefasst und gehalten werden kann. Die Adaptereinrichtung 230 kann bei allen Ausführungsformen ein gewinkeltes Werkteilgebinde-Adapterteil 236 umfassen, das zwei Werkteilgebinde-Haken 236 aufweist, um in den Relinglängssteg 167 und/oder den Bodenlängsbegrenzungssteg 161 des Werkteilgebindes 160 eingreifen zu können.

Die zweite Adaptereinrichtung 240 kann bei allen Ausführungsformen seitlich an der Werkteilgebinde-Greifeinrichtung 222 befestigt sein, wie in Fig. 8 gezeigt. Die zweite Adaptereinrichtung 240 kann bei allen Ausführungsformen ein Werkteilgebinde-Adapterteil 242 mit Werkteilgebinde-Haken 246 umfassen, die z.B. dazu ausgelegt sind in den Relinglängssteg 167 und/oder den Bodenlängsbegrenzungssteg 161 des Werkteilgebindes 160 einzugreifen.

Die Vorrichtung 100 kann bei allen Ausführungsformen so ausgelegt sein, dass die erste bestimmte vordefinierte Werkteilgebinde-Position eine der in der Vorrichtung 100 definierbaren Werkteilgebinde-Position in einem Werkteilgebinde-Stapel 136, 146, 156 auf einem in der Stapelzelleneinrichtung 120 abgestellten Bodenroller 132, 142, 152 ist.

Die Vorrichtung 100 kann bei allen Ausführungsformen so ausgelegt sein, dass eine zweite bestimmte vordefinierte Werkteilgebinde-Position eine der in der Vorrichtung 100 definierbaren Positionen auf einem Werkteilgebinde-Stapel 136, 146, 156 auf einem in der Stapelzelleneinrichtung 120 abgestellten Bodenroller 132, 142, 152 ist.

Die Vorrichtung 100 kann bei allen Ausführungsformen so ausgelegt sein, dass die Vorzentrierungseinrichtung 170 innerhalb eines Arbeitsbereichs des Roboters 200, etwa innerhalb einer Reichweite des Roboterarms 205 des Roboters 200 angeordnet ist.

Die Vorrichtung 100 kann bei allen Ausführungsformen so ausgelegt sein, dass die Vorzentrierungseinrichtung 170 außerhalb der Stapelzelleneinrichtung 120 angeordnet ist.

Die Vorrichtung 100 kann bei allen Ausführungsformen so ausgelegt sein, dass die Vorzentrierungseinrichtung 170, in einer Blickrichtung vom Roboter 200 zu der Stapelzelleneinrichtung 120 gesehen, vor oder neben der Stapelzelleneinrichtung 120 angeordnet ist.

Die Vorrichtung 100 kann bei allen Ausführungsformen so ausgelegt sein, dass der Roboter 200 mit der Greifeinrichtung 210 ein Werkteilgebinde 160 von einer Vorzentrierungsposition aufnehmen und es zu einer obersten Vertikalposition 138, 148, 158 auf einem Werkteilgebinde-Stapel 136, 146, 156 auf einem in der Stapelzelleneinrichtung 120 abgestellten Bodenroller 180; 132, 142, 152 überführen und dort abstellen kann.

Die Vorrichtung 100 kann bei allen Ausführungsformen so ausgelegt sein, dass in dem Koordinatensystem jeder in der Vorrichtung 100 anfahrbaren Werkteilgebinde-Positionen eine Werkteilgebinde-Positionstoleranz zugeordnet ist. In der Vorrichtung 100 ist auch eine allgemeine Werkteilgebinde-Positionstoleranz vorgegeben, die eine Obergrenze für die in der Vorrichtung 100 anfahrbaren Werkteilgebinde-Positionen zugeordneten Werkteilgebinde-Positionstoleranz ist. Der Roboter 200 hat eine vorbestimmte Anfahrgenauigkeit für ein Anfahren mittels der Greifeinrichtung 210 einer in der Vorrichtung 100 anfahrbaren Position und eine entsprechende vorbestimmte Fehlertoleranz für ein Wiederanfahren dieser anfahrbaren Position. Die Vorrichtung 100 ist so ausgestaltet, dass die allgemeine Werkteilgebinde-Positionstoleranz kleiner als die Fehlertoleranz für das Wiederanfahren durch die Greifeinrichtung 210 ist. Das Einhalten der allgemeinen Werkteilgebinde-Positionstoleranz wird durch das Beschriebene Arretieren in der Stapelzelleneinheit 120 erzielt.

Die Vorrichtung 100 kann bei allen Ausführungsformen so ausgelegt sein, dass in der Stapelzelleneinheit 120 an bzw. auf jedem Abstellplatz 130, 140, 150 Positionierungsmittel 125, 126 (siehe Fig. 3) zum Positionieren eines Bodenrollers 180; 132, 142, 152 in eine vordefinierte Horizontalposition und Arretiermittel 127 zum Arretieren des Bodenrollers in der vordefinierten Horizontalposition und mit einer innerhalb der Stapelzelleneinheit 120 vordefinierten im Wesentlichen vertikalen Stapelrichtung z vorgesehen sind.

Vorzugsweise umfassen die Positionierungsmittel bei allen Ausführungsformen Linearführungsmittel 125 zum Führen eines Bodenrollers 180; 132, 142, 152 entlang eines vordefinierten Rollwegs sowie Anschlag- bzw. Einrastmittel 126 zum Vorgeben einer Stoppposition des Bodenrollers 180 entlang des Rollwegs.

Vorzugsweise umfassen die Linearführungsmittel 125 bei allen Ausführungsformen eine Führungsschiene oder Kufe zum linearen Führen von Rollen 195 des Bodenrollers 180 und das Anschlag- bzw. Einrastmittel 126 einen Stopper für mindestens eine Rolle 195 eines Bodenrollers 180.

Vorzugsweise umfasst jeder Bodenroller 180; 132, 142, 152 einen im Wesentlichen horizontal gelagerten Bodenrollerträger 184; 134, 144, 154 und die Arretiermittel 127 sind so ausgestaltet, dass ein durch eine etwaige Neigung des Bodenrollerträgers 184; 134, 144, 154 verursachter Versatz eines auf dem Bodenrollerträger gestapelten Werkteilgebindes 160 in eine genaue Soll-Position gebracht wird.

Vorzugsweise umfasst jeder Bodenroller 180; 132, 142, 152 einen im Wesentlichen horizontal gelagerten Bodenrollerträger 184; 134, 144, 154 und die Arretierungsmittel 127, 128 sind dazu ausgebildet, einen Bodenroller 180; 132, 142, 152 in einer im Wesentlichen vertikalen Richtung zu arretieren, so dass der Neigungswinkel β des Bodenrollers 180; 132, 142, 152, der durch die Winkelabweichung β der Flächennormalen auf dem Bodenrollerträger 184; 134, 144, 154 von der vertikalen Richtung definiert ist (wie in Fig. 3 rechts angedeutet), kleiner als ein vorbestimmter Neigungstoleranzwinkel ist.

Vorzugsweise ist in der Vorrichtung 100 für die Werkteilgebinde 160 eine allgemeine Werkteil-Positionstoleranz vorgegeben, die eine Obergrenze ist für die Werkteil-Positionstoleranzen von Werkteilen 102, die in den in den Werkteilgebinden 160 vordefinierten Werkteil-Positionen gelagert sind.

Vorzugsweise weist die Werkteil-Greifeinrichtung 212 einen effektiven Werkteil-Greifhub auf, der größer als die Summe aus der Fehlertoleranz der Greifeinrichtung 212 für ein Wiederanfahren einer vordefinierten Werkteilgebinde-Position, der allgemein Werkteilgebinde-Positionstoleranz und der allgemeinen Werkteil-Positionstoleranz eines Werkteils 102 innerhalb eines Werkteilgebindes 160 ist.

Die Werkteil-Greifeinrichtung 212 umfasst bei allen Ausführungsformen vorzugsweise eine Werkteil-Greifhand 214 mit zwei oder mehr Werkteil-Greiffingern 216 zum Greifen bzw. Aufnehmen eines Werkteils 102, wie z.B. in Fig. 6 zu erkennen ist. Die Werkteil-Greiffinger 216 sind so ansteuerbar, dass sie eine Öffnungsposition und eine Greifposition einnehmen können, wobei in der Öffnungsposition der Werkteil-Greifhand 214 eine freie Greiföffnung mit einem vordefinierten maximalen Greiffingerabstand entsteht, und wobei in der Greifposition die Werkteil-Greiffinger 216 ein Werkteil 102 formschlüssig lösbar greifen kann.

Zusätzlich zu der Werkteil-Greifeinrichtung 212 umfasst die Greifeinrichtung 210 des Roboters 200 vorzugsweise eine Werkteilgebinde-Greifeinrichtung 222, die zum direkten Greifen bzw. Aufnehmen und Tragen von Werkteilgebinden 160 ausgelegt ist, wie in Fig. 2, 3 und 7 zu erkennen ist und wie bereits beschrieben wurde. Die Werkteilgebinde-Greifeinrichtung 222 weist einen effektiven Werkteilgebinde-Greifhub auf, der größer als die Summe aus der Fehlertoleranz der Greifeinrichtung 212 für ein Wiederanfahren einer vordefinierten Position und der allgemein Werkteilgebinde-Positionstoleranz ist.

Die Werkteilgebinde-Greifeinrichtung 222 umfasst vorzugsweise bei allen Ausführungsformen eine Werkteilgebinde-Greifhand 224 mit zwei oder mehr Werkteilgebinde-Greiffingern 226 zum Greifen bzw. Aufnehmen eines Werkteilgebindes 160. Die Werkteilgebinde-Greiffinger 226 sind so ansteuerbar, dass sie eine Öffnungsposition und eine Greifposition einnehmen können, wobei in der Öffnungsposition der Werkteilgebinde-Greifhand 224 eine freie Greiföffnung mit einem vordefinierten maximalen Greiffingerabstand entsteht, und wobei in der Greifposition die Werkteilgebinde-Greiffinger 226 ein Werkteilgebinde 160 oder einen Greifabschnitt eines Werkteilgebindes 160 formschlüssig lösbar greifen können.

Vorzugsweise umfassen die Werkteilgebinde 160 bei allen Ausführungsformen einen speziell ausgeführten Greifabschnitt, der ein sicheres und stabiles Greifen und Anheben des Werkteilgebindes 160 mit der Adaptereinrichtung 230 oder der zweite Adaptereinrichtung 240 ermöglicht. Besonders bevorzugt sind Ausführungsformen, bei denen ein Werkteil oder Werkteil-Dummy als Greifabschnitt dient. Das entsprechende Werkteil oder der Werkteil-Dummy ist zu diesem Zweck fest mit dem Werkteilgebinde 160 verbunden. Da der Roboter 200 zum Greifen von Werkteilen 102 ausgelegt ist, kann er somit ohne den Einsatz einer speziellen Adaptereinrichtung 230 oder 240 ein Werkteilgebinde 160 greifen und heben, indem er das Werkteil oder den Werkteil-Dummy fasst, der am Werkteilgebinde 160 sitzt. Dies kann zum Beispiel unter Einsatz der Werkteil-Greifeinrichtung 212 erfolgen.

Der Greifabschnitt ist vorzugsweise bei allen Ausführungsformen so ausgebildet, dass er von einer Werkteilgebinde-Greifeinrichtung 222 formschlüssig und lösbar ergriffen werden kann. Der Greifabschnitt ist zu diesem Zweck seitlich oder parallel zu einem Boden des Werkteilgebindes 160 angeordnet, so dass der Werkteilgebinde 160 von einer Werkteilgebinde-Greifeinrichtung 212 in einer horizontalen Richtung (d.h. seitlich) oder in einer vertikalen Richtung (etwa von oben) angefahren werden kann.

Die Greifeinrichtung 210 des Roboters 200 kann bei allen Ausführungsformen eine Adaptereinrichtung 230 (wie z.B. in Fig. 7 gezeigt) oder eine Adaptereinrichtung 240 (wie z.B. in Fig. 8 gezeigt) umfassen, die so ausgestaltet ist, dass sie ein Werkteilgebinde 160 direkt greifen, aufnehmen bzw. tragen kann.

Vorzugsweise kommt bei allen Ausführungsformen ein 6-achsiger Industrieroboter 200 zum Einsatz, der eine Sockeleinheit 202, eine auf der Sockeleinheit 202 um eine vertikale erste Achse drehbar gelagerte Basiseinheit 204, einen Roboterarm 205 mit einem ersten Armabschnitt 206 und einem zweiten Armabschnitt 208 umfasst. Ferner sind der erste Armabschnitt 206 mit einem Ende an der Basiseinheit 204 um eine horizontale zweite Achse schwenkbar angelenkt und der zweite Armabschnitt 208 mit einem Ende an dem anderen Ende des ersten Armabschnitts 206 um eine horizontale und zur zweiten Achse parallele Achse schwenkbar angelenkt und um seine eigene Längsachse (dritte Achse) drehbar gelagert. Die Greifeinrichtung 210 ist an dem anderen Ende des zweiten Armabschnitts 208 um dessen Längsachse drehbar gelagert ist.

Vorzugsweise umfasst die Greifeinrichtung 210 eine Wechseleinrichtung 220 (siehe z.B. Fig. 6), die an einem distalen Ende der Greifeinrichtung 210 um eine Wechselachse (vierte Achse) drehbar gelagert befestigt ist. Sie kann in einer die Wechselachse enthaltenden Querschnittebene im Wesentlichen die Form eines rechtwinkligen Dreiecks aufweisen. Die Werkteil-Greifeinrichtung 212 ist um eine fünfte Achse drehbar an der Wechseleinrichtung 220 gelagert, wobei die fünfte Achse in einem Winkel vom im Wesentlichen 45° zu der Wechselachse (vierten Achse) orientiert ist. Die Werkteilgebinde-Greifeinrichtung 222 ist um eine sechste Achse drehbar an der Wechseleinrichtung 220 gelagert, wobei die sechste Achse in einem Winkel vom im Wesentlichen 45° zu der Wechselachse (vierten Achse) orientiert ist.

Gemäss Erfindung umfasst der Roboter (200) ein Computerprogrammprodukt CS zum Steuern der Bewegungen des Roboters 200. Das Computerprogrammprodukt CS ist dazu in der Lage (d.h. es ist entsprechend programmiert und/oder trainiert), wenn es in einen Arbeitsspeicher einen Computer des Roboters 200 geladen wird, die Ausführung der Schritte des erfindungsgemässen Verfahrens zu steuern.

### Bezugzeichenliste:

- 20: Stapelzelleneinheit
- 21: Bodenplatte
- 22: erster Vertikalträger
- 23: zweiter Vertikalträger
- 24: dritter Vertikalträger
- 25: vierter Vertikalträger
- 26: erster Längsträger
- 27: zweiter Längsträger
- 30: erster Abstellplatz
- 32: erster Bodenroller
- 34: erster Bodenrollerträger
- 36: erster Stapel
- 38.1 ... 38.n: Vertikalposition
- 40: zweiter Abstellplatz
- 42: zweiter Bodenroller
- 44: zweiter Bodenrollerträger
- 50: dritter Abstellplatz
- 52: dritter Bodenroller
- 54: dritte Bodenrollerplatte
- 56: dritter Stapel
- 58.1 ... 58.m: Vertikalposition
- 60: Werkteilgebinde
- 70: Traverseneinrichtung
- 72: Trägerrahmen
- 73: Doppelpfeil (Y-Verschiebungsrichtung)
- 74: Traversenträger
- 75: Doppelpfeil (Z-Verschiebungsrichtung)
- 80: Ablageeinrichtung
- 82: Rückwand
- 84: Ablagefläche
- 86: seitliche Zentriermittel
- 87: rückwärtige Zentriermittel
- 88: vorderseitige Zentriermittel

- 90: Bearbeitungsmaschine
- 100: Roboterzellensystem
- 102: Werkteil

- 120: Stapelzelleneinheit
- 121: erste Zellenseitenwand
- 122: zweite Zellenseitenwand
- 123: dritte Zellenseitenwand
- 124: vierte Zellenseitenwand
- 125: Führungsmittel
- 126: Anschlag- bzw. Einrastmittel
- 127: erstes Arretiermittel
- 130: erster Abstellplatz
- 131: erste Einstellzelle
- 132: erster Bodenroller

- 134: erster Bodenrollerträger
- 136: erster Stapel
- 138.1 ... 138.n: Vertikalposition
- 140: zweiter Abstellplatz
- 141: zweite Einstellzelle
- 142: zweiter Bodenroller
- 144: zweiter Bodenrollerträger
- 146: zweiter Stapel
- 150: dritter Abstellplatz
- 151: dritte Einstellzelle
- 152: dritter Bodenroller
- 154: dritter Bodenrollerträger
- 156: dritter Stapel
- 158.1 ... 158.n: Vertikalposition
- 160: Werkteilgebinde
- 161: Bodenlängsbegrenzungssteg
- 162: Bodenquerbegrenzungssteg
- 163: Bodengitterlängssteg
- 164: Bodengitterquersteg
- 165: Eckträger
- 166: Seitenträger
- 167: Relinglängssteg
- 168: Relingquersteg
- 170: Vorzentrierungseinrichtung
- 172: Sockel
- 174: Auflageplatte
- 176: erster Vorzentrierungsplatz
- 178: zweiter Vorzentrierungsplatz
- 180: Bodenroller
- 188.1 - 188.n: Vertikalposition
- 190: Bodenrollerträger
- 191: Trägerplatte
- 192: Trägerlängsseitenwand
- 193: Trägerquerseitenwand
- 194: Rollenaufhängung
- 195: Rolle
- 196: Zentriermittel
- 197: Zentrierbügel
- 198: Eckauflagesteg
- 200: Roboter
- 202: Sockeleinheit
- 204: Basiseinheit
- 205: Roboterarm
- 206: erstes Armelement
- 208: zweites Armelement
- 210: Greifeinrichtung
- 212: Werkteil-Greifeinrichtung
- 214: Greifhand
- 216: Greiffinger
- 220: Wechseleinrichtung

- 222: Werkteilgebinde-Greifeinrichtung
- 224: Werkteilgebinde-Greifhand
- 226: Werkteilgebinde-Greiffinger
- 230: erste Adaptereinrichtung
- 232: Greifhand-Adapterteil
- 234: Werkteilgebinde-Adapterteil
- 236: erster Werkteilgebinde-Haken
- 240: zweite Adaptereinrichtung
- 242: Werkteilgebinde-Adapterteil
- 246: zweiter Werkteilgebinde-Haken

- A1: Achse
- CS: Computerprogrammprodukt
- X, Y, Z: Koordinatensystem (in Bezug auf Roboter)
- α: Neigungswinkel eines Stapels
- x, y, z: Koordinatensystem (in Bezug auf Werkteilgebinde)

## Patentansprüche

1. Vorrichtung (100) zum Überführen von Werkteilen (102), die in Werkteilgebinden (160) bereitgestellt sind, zu einer Bearbeitungsmaschine (90), wobei das Überführen automatisiert mittels eines Roboters (200) ausgeführt werden, wobei in der Vorrichtung (100) ein Koordinatensystem definiert ist, und die Vorrichtung (100) folgendes umfasst:
(a) übereinander stapelbare Werkteilgebinde (160), mit mehreren vordefinierten Werkteilpositionen zum Lagern je eines Werkteils (102);
(b) Bodenroller (180; 132, 142, 152) zum Aufnehmen von mindestens einem Werkteilgebinde (160);
(c) eine Stapelzelleneinrichtung (120) mit einem Abstellplatz (130, 140, 150) für den Bodenroller (180; 132, 142, 152);
(d) einen Roboter (200), der eine Greifeinrichtung (210) zum Anfahren von in dem Koordinatensystem vorgebbaren Positionen umfasst und der programmiert ist, ein Werkteil (102) aus einem Werkteilgebinde (160) mittels seiner Greifeinrichtung (210) aufzunehmen und zu der Bearbeitungsmaschine (90) zur Bearbeitung zu überführen;
**dadurch gekennzeichnet, dass** die Vorrichtung (100) eine Vorzentrierungseinrichtung (170) umfasst, die eine Vorzentrierungsposition (176; 178) als durch die Greifeinrichtung (210) anfahrbare Werkteilgebinde-Position für ein Werkteilgebinde (160) bereitstellt, und dass der Roboter (200) programmiert ist mit seiner Greifeinrichtung (210) ein Werkteilgebinde (160) in der Stapelzelleneinrichtung (120) anzufahren, dieses Werkteilgebinde (160) aus der Stapelzelleneinrichtung (120) zu entnehmen, zu der Vorzentrierungsposition (176; 178) zu überführen und dort in der Werkteilgebinde-Position abzustellen.

2. Vorrichtung (100) nach Anspruch 1, **dadurch gekennzeichnet, dass** es sich bei dem Koordinatensystem um ein Koordinatensystem (X, Y, Z) handelt, das in Bezug auf den Roboter (200) räumlich definiert ist.

3. Vorrichtung (100) nach Anspruch 1 oder 2, **dadurch gekennzeichnet, dass** jeder Bodenroller (180) dazu ausgebildet ist auf einer Bodenfläche verschoben zu werden und einen aus mindestens einem Werkteilgebinde (160) gebildeten Werkteilgebinde-Stapel (182) zu tragen, wobei jedem Werkteilgebinde (160) in diesem Stapel (182) eine in vertikaler Richtung definierte Vertikalposition (188.1 - 188.n) zugeordnet ist.

4. Vorrichtung (100) nach Anspruch 1 oder 2, **dadurch gekennzeichnet, dass** die Vorzentrierungseinrichtung (170) außerhalb der Stapelzelleneinrichtung (120) angeordnet ist.

5. Vorrichtung (100) nach Anspruch 1, 2 oder 4, **dadurch gekennzeichnet, dass** der Roboter (200) ferner dazu ausgestattet und programmiert ist, mit der Greifeinrichtung (210) ein Werkteilgebinde (160) von einer Vorzentrierungsposition (176; 178) aufzunehmen, zu einer obersten Vertikalposition (138.n, 158.m) auf einem Werkteilgebinde-Stapel (136, 156) auf einem in der Stapelzelleneinrichtung (120) abgestellten Bodenroller (180; 132, 142, 152) zu überführen und dort abzustellen.

6. Vorrichtung (100) nach einem der Ansprüche 1 bis 4, **dadurch gekennzeichnet, dass** in dem Koordinatensystem jeder in der Vorrichtung (100) anfahrbaren Werkteilgebinde-Positionen eine Werkteilgebinde-Positionstoleranz zugeordnet ist, dass in der Vorrichtung (100) eine allgemeine Werkteilgebinde-Positionstoleranz vorgegeben ist, die eine Obergrenze für die in der Vorrichtung (100) anfahrbaren Werkteilgebinde-Positionen zugeordneten Werkteilgebinde-Positionstoleranz ist, dass dem Roboter (200) eine vorbestimmte Anfahrgenauigkeit für ein Anfahren mittels der Greifeinrichtung (210) einer in der Vorrichtung (100) anfahrbaren Position und eine entsprechende vorbestimmte Fehlertoleranz für ein Wiederanfahren dieser anfahrbaren Position zugeordnet sind, und dass das Vorrichtung (100) so ausgestaltet ist, dass die allgemeine Werkteilgebinde-Positionstoleranz kleiner als die Fehlertoleranz für das Wiederanfahren durch die Greifeinrichtung (210) ist.

7. Vorrichtung (100) nach einem der Ansprüche 1 bis 4, **dadurch gekennzeichnet, dass** in der Vorrichtung (100) für die Werkteilgebinde (160) eine allgemeine Werkteil-Positionstoleranz vorgegeben ist, die eine Obergrenze ist für die Werkteil-Positionstoleranzen von Werkteilen (102), die in den in den Werkteilgebinden (160) vordefinierten Werkteil-Positionen gelagert sind.

8. Vorrichtung (100) nach einem der Ansprüche 1 bis 4, **dadurch gekennzeichnet, dass** in der Stapelzelleneinheit (120) an bzw. auf jedem Abstellplatz (130, 140, 150) Positionierungsmittel (125, 126) zum Positionieren eines Bodenrollers (180; 132, 142, 152) in eine vordefinierte Horizontalposition und Arretiermittel (127) zum Arretieren des Bodenrollers (180; 132, 142, 152) in der vordefinierten Horizontalposition und mit einer innerhalb der Stapelzelleneinheit (120) vordefinierten im Wesentlichen vertikalen Stapelrichtung vorgesehen sind.

9. Vorrichtung (100) nach Anspruch 8, **dadurch gekennzeichnet, dass** die Positionierungsmittel Linearführungsmittel (125) zum Führen eines Bodenrollers (180; 132, 142, 152) entlang eines vordefinierten Rollwegs sowie Anschlag- bzw. Einrastmittel (126) zum Vorgeben einer Stoppposition des Bodenrollers (180) entlang des Rollwegs umfassen.

10. Vorrichtung (100) nach Anspruch 9, **dadurch gekennzeichnet, dass** die Linearführungsmittel (125) eine Führungsschiene - oder kufe zum linearen Führen von Rollen (195) des Bodenrollers (180) und das Anschlag- bzw. Einrastmittel (126) einen Stopper für eine Rolle (195) eines Bodenrollers (180) umfasst.

11. Vorrichtung (100) nach einem der Ansprüche 8 oder 9, **dadurch gekennzeichnet, dass** jeder Bodenroller (180; 132, 142, 152) einen im Wesentlichen horizontal gelagerten Bodenrollerträger (184; 134, 144, 154) umfasst und dass die Arretiermittel (127) so ausgestaltet sind, dass ein durch eine etwaige Neigung des Bodenrollerträgers (184; 134, 144, 154 verursachter Versatz eines auf dem Bodenrollerträger gestapelten Werkteilgebindes (160) in ein Soll-Position bringbar ist.

12. Vorrichtung (100) nach einem der Ansprüche 8 bis 10, **dadurch gekennzeichnet, dass** jeder Bodenroller (180; 132, 142, 152) einen im Wesentlichen horizontal gelagerten Bodenrollerträger (184; 134, 144, 154) umfasst und dass die Arretierungsmittel (127) dazu ausgebildet sind, einen Bodenroller (180; 132, 142, 152) in einer im Wesentlichen vertikalen Richtung zu arretieren, so dass ein Neigungswinkel (β) des Bodenrollers (180; 132, 142, 152), der durch die Winkelabweichung (β) der Flächennormalen auf dem Bodenrollerträger (184; 134, 144, 154) von der vertikalen Richtung definiert ist, kleiner als ein vorbestimmter Neigungstoleranzwinkel ist.

13. Vorrichtung (100) nach einem der Ansprüche 1 bis 12, **dadurch gekennzeichnet, dass** die Greifeinrichtung (210) des Roboters (200) so ausgestaltet ist, dass sie sowohl ein Werkteil (102) als auch ein Werkteilgebinde (160) greifen kann.

14. Vorrichtung (100) nach Anspruch 13, **dadurch gekennzeichnet, dass** die Greifeinrichtung (210) des Roboters (200) eine Werkteil-Greifeinrichtung (212) umfasst, die zum direkten Greifen und Aufnehmen eines Werkteils (102) ausgebildet ist.

15. Vorrichtung (100) nach Anspruch 14, **dadurch gekennzeichnet, dass** die Werkteil-Greifeinrichtung (212) einen effektiven Werkteil-Greifhub aufweist, der größer als die Summe aus der Fehlertoleranz der Greifeinrichtung (212) für ein Wiederanfahren einer vordefinierten Werkteilgebinde-Position, der allgemein Werkteilgebinde-Positionstoleranz und der allgemeinen Werkteil-Positionstoleranz eines Werkteils (102) innerhalb eines Werkteilgebindes (160) ist.

16. Vorrichtung (100) nach Anspruch 14 oder 15, **dadurch gekennzeichnet, dass** die Werkteil-Greifeinrichtung (212) eine Werkteil-Greifhand (214) mit zwei oder mehr Werkteil-Greiffingern (216) zum Greifen bzw. Aufnehmen eines Werkteils (102) umfasst, wobei die Werkteil-Greiffinger (216) so ansteuerbar sind, dass sie eine Öffnungsposition und eine Greifposition einnehmen können, wobei in der Öffnungsposition der Werkteil-Greifhand (214) eine freie Greiföffnung mit einem vordefinierten maximalen Greiffingerabstand entsteht, und wobei in der Greifposition die Werkteil-Greiffinger (216) ein Werkteil (102) formschlüssig lösbar greifen können.

17. Vorrichtung (100) nach einem der Ansprüche 14 bis 16, **dadurch gekennzeichnet, dass** die Greifeinrichtung (210) des Roboters (200) zusätzlich zu der Werkteil-Greifeinrichtung (212) eine Werkteilgebinde-Greifeinrichtung (222) umfasst, die zum direkten Greifen bzw. Aufnehmen und Tragen von Werkteilgebinden (160) ausgelegt ist.

18. Vorrichtung (100) nach Anspruch 17, **dadurch gekennzeichnet, dass** die Werkteilgebinde-Greifeinrichtung (222) einen effektiven Werkteilgebinde-Greifhub aufweist, der größer als die Summe aus der Fehlertoleranz der Greifeinrichtung (212) für ein Wiederanfahren einer vordefinierten Position und der allgemein Werkteilgebinde-Positionstoleranz ist.

19. Vorrichtung (100) nach Anspruch 17 oder 18, **dadurch gekennzeichnet, dass** die Werkteilgebinde-Greifeinrichtung (222) eine Werkteilgebinde-Greifhand (224) mit Werkteilgebinde-Greiffingern (226) zum Greifen bzw. Aufnehmen eines Werkteilgebindes (160) umfasst, wobei die Werkteilgebinde-Greiffinger (226) so ansteuerbar sind, dass sie eine Öffnungsposition und eine Greifposition einnehmen können, wobei in der Öffnungsposition der Werkteilgebinde-Greifhand (224) eine freie Greiföffnung mit einem vordefinierten maximalen Greiffingerabstand entsteht, und wobei in der Greifposition die Werkteilgebinde-Greiffinger (226) ein Werkteilgebinde (160) oder einen Greifabschnitt eines Werkteilgebindes formschlüssig lösbar greifen können.

20. Vorrichtung (100) nach einem der Ansprüche 16 bis 19, **dadurch gekennzeichnet, dass** die Greifeinrichtung (210) des Roboters (200) eine Adaptereinrichtung (230, 240) umfasst, die so ausgestaltet ist, dass sie ein Werkteilgebinde (160) direkt greifen, aufnehmen oder tragen kann.

21. Vorrichtung (100) nach einem der Ansprüche 16 bis 20, **dadurch gekennzeichnet, dass** die Werkteilgebinde-Greifeinrichtung (220) eine erste Adaptereinrichtung (230) umfasst, die so ausgestaltet ist, dass sie von der Werkteil-Greifhand (214) und/oder von der Werkteilgebinde-Greifhand (224) ergriffen und lösbar festgehalten werden und ein Werkteilgebinde (160) direkt greifen, aufnehmen oder tragen kann.

22. Vorrichtung (100) nach einem der Ansprüche 14 bis 20, **dadurch gekennzeichnet, dass** die Greifeinrichtung (210) des Roboters (200) eine zweite Adaptereinrichtung (240) umfasst, die so ausgestaltet ist, dass sie an der Werkteil-Greifeinrichtung (212) oder an der Werkteilgebinde-Greifeinrichtung (220) befestigt ist und ihrerseits ein Werkteilgebinde (160) direkt greifen, aufnehmen oder tragen kann.

23. Vorrichtung (100) nach einem der Ansprüche 1 bis 22, **dadurch gekennzeichnet, dass** der Roboter (200) ein 6-achsiger Industrieroboter ist und eine Sockeleinheit (202), eine auf der Sockeleinheit (202) um eine vertikale erste Achse drehbar gelagerte Basiseinheit (204), einen Roboterarm (205) mit einem ersten Armabschnitt (206) und einem zweiten Armabschnitt (208), und ferner die Greifeinrichtung (210) umfasst,
■ wobei der erste Armabschnitt (206) mit einem Ende an der Basiseinheit (204) um eine horizontale zweite Achse schwenkbar angelenkt ist,
■ wobei der zweite Armabschnitt (208) mit einem Ende an dem anderen Ende des ersten Armabschnitts (206) um eine horizontale und zur zweiten Achse parallele Achse schwenkbar angelenkt und um seine eigene Längsachse (dritte Achse) drehbar gelagert ist, und
■ wobei die Greifeinrichtung (210) an dem anderen Ende des zweiten Armabschnitts (208) um dessen Längsachse drehbar gelagert ist.

24. Vorrichtung (100) nach Anspruch 23, **dadurch gekennzeichnet, dass** die Greifeinrichtung (210) folgendes umfasst:
■ eine Wechseleinrichtung (220), die an einem distalen Ende der Greifeinrichtung (210) um eine Wechselachse (vierte Achse) drehbar gelagert befestigt ist, die in einer die Wechselachse enthaltenden Querschnittebene im Wesentlichen die Form eines rechtwinkligen Dreiecks aufweist,
■ eine Werkteil-Greifeinrichtung (212), die um eine fünfte Achse drehbar gelagert an der Wechseleinrichtung (220) befestigt ist, wobei die fünfte Achse in einem Winkel vom im Wesentlichen 45° zu der Wechselachse (vierten Achse) orientiert ist, und
■ eine Werkteilgebinde-Greifeinrichtung (222), die um eine sechste Achse drehbar gelagert an der Wechseleinrichtung (220) befestigt ist, wobei die sechste Achse in einem Winkel vom im Wesentlichen 45° zu der Wechselachse (vierten Achse) orientiert ist.

25. Vorrichtung (100) nach einem der Ansprüche 1 bis 24, **dadurch gekennzeichnet, dass** jeder Werkteilgebinde (160) einen Greifabschnitt aufweist, der so ausgebildet ist, dass er von einer Werkteilgebinde-Greifeinrichtung (222) formschlüssig und lösbar ergriffen werden kann, und der seitlich oder parallel zu einem Boden des Werkteilgebindes (160) angeordnet sein kann, so dass der Werkteilgebinde (160) von einer Werkteilgebinde-Greifeinrichtung (212) in einer horizontalen Richtung oder in einer vertikalen Richtung angefahren werden kann.

26. Verfahren zum Überführen von Werkteilen (102), die in einem Werkteilgebinde (160) einer Stapelzelleneinrichtung (120) bereitgestellt sind, zu einer Bearbeitungsmaschine (90) und zum Rücküberführen bearbeiteter Werkteile (102) in ein Werkteilgebinde (160), wobei folgende Schritte ausgeführt werden:
- Bereitstellen übereinander gestapelter Werkteilgebinde (160) mit mehreren vordefinierten Werkteilpositionen, wobei an jeder Werkteilposition ein Werkteil (102) gelagert ist;
- Bereitstellen eines Bodenrollers (180; 132, 142, 152) mit mindestens einem Werkteilgebinde (160);
- Bereitstellen einer Stapelzelleneinrichtung (120) mit Abstellplätzen (130, 140, 150) für Bodenroller (180; 132, 142, 152);
- Einsetzen eines Roboters (200) mit Greifeinrichtung (210) zum automatisierten Ausführen von Bewegungen;
- Ausführen einer Entnahmebewegung der Greifeinrichtung (210), um mit dieser aus einem Werkteilgebinde (160) ein Werkteil (102) zu entnehmen und der Bearbeitungsmaschine (90) zur Bearbeitung zuzuführen,
- Ausführen einer Bewegung der Greifeinrichtung (210), um mit dieser ein bearbeitetes Werkteil (102) aufzunehmen und abzulegen;
**gekennzeichnet, durch** folgende automatisierte Bewegungen, die **durch** den Roboter (200) ausgeführt werden:
- Greifen eines Werkteilgebindes (160) in der Stapelzelleneinrichtung (120),
- Entnehmen des Werkteilgebindes (160) samt Werkteilen (102) aus der Stapelzelleneinrichtung (120),
- Abstellen des Werkteilgebindes (160) samt Werkteilen (102) in einer Vorzentrierungsposition (176; 178) einer Vorzentrierungseinrichtung (170),
wobei beim Ausführen der Entnahmebewegung ein Werkteil (102) aus dem Werkteilgebinde (160) entnommen wird, das sich in der Vorzentrierungsposition (176; 178) der Vorzentrierungseinrichtung (170) befindet.

27. Verfahren nach Anspruch 26, **dadurch gekennzeichnet, dass** in einem vorbereitenden Schritt ein Bodenroller (180; 132, 142, 152) entlang einer Bodenfläche bewegt und auf einem Abstellplatz (130, 140, 150) der Stapelzelleneinrichtung (120) abgestellt wird, und einen aus mindestens einem Werkteilgebinde (160) gebildeten Werkteilgebinde-Stapel (182) trägt, wobei jedem Werkteilgebinde (160) in diesem Werkteilgebinde-Stapel (182) eine in vertikaler Richtung definierte Vertikalposition (188.1 - 188.n) zugeordnet ist.

28. Verfahren nach Anspruch 26 oder 27, **dadurch gekennzeichnet, dass** in der Stapelzelleneinheit (120) an oder auf jedem Abstellplatz (130, 140, 150) Positionierungsmittel (125, 126) vorgesehen sind und dass ein Bodenroller (180; 132, 142, 152) in eine vordefinierte Horizontalposition bewegt und mit Arretiermittel (127) zum Arretieren des Bodenrollers in der vordefinierten Horizontalposition arretiert wird.

29. Verwendung einer Vorrichtung (100) nach einem der Ansprüche 1 bis 25 bzw. eines Verfahrens nach Anspruch 26 in der Werkstückfertigung, Werkteilmontage, in einer Teilefertigung in der Automobilindustrie oder der Luft- oder der Raumfahrtindustrie.

30. Computerprogrammprodukt zum Steuern eines Roboters (200), der in einer Vorrichtung (100) nach einem der Ansprüche 1 bis 25 eingesetzt ist, wobei das Computerprogrammprodukt dazu in der Lage ist, wenn es in einen Arbeitsspeicher einen Computer des Roboters (200) geladen wird, die Ausführung der Schritte des Verfahrens nach Anspruch 26 zu steuern.
